(19) Europäisches Patentamt / European Patent Office / Office européen des brevets

(11) **EP 2 668 765 B1**

(12) **EUROPEAN PATENT SPECIFICATION**

(45) Date of publication and mention
of the grant of the patent:
**07.01.2015 Bulletin 2015/02**

(21) Application number: **12702746.4**

(22) Date of filing: **23.01.2012**

(51) Int Cl.:
*H04L 29/08* (2006.01)       *H04W 4/02* (2009.01)
*H04W 4/04* (2009.01)       *H04B 7/26* (2006.01)
*G05D 5/00* (2006.01)       *G05D 7/06* (2006.01)
*G01C 15/00* (2006.01)       *G08C 17/00* (2006.01)
*G08C 21/00* (2006.01)       *A01F 25/16* (2006.01)
*G01K 1/02* (2006.01)

(86) International application number:
**PCT/DK2012/000002**

(87) International publication number:
**WO 2012/100773 (02.08.2012 Gazette 2012/31)**

(54) **CONTROLLER FOR A WIRELESS SENSOR AND METHOD FOR DETERMINING THE LOCATION OF A WIRELESS SENSOR IN A BIOMASS**

STEUERUNG FÜR EINEN DRAHTLOSSENSOR UND VERFAHREN ZUR ORTUNG EINES DRAHTLOSSENSORS IN EINER BIOMASSE

CONTRÔLEUR POUR UN CAPTEUR SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2011 GB 201101182**

(43) Date of publication of application:
**04.12.2013 Bulletin 2013/49**

(73) Proprietor: **Kongskilde Becker Holding A/S
4180 Sorø (DK)**

(72) Inventor: **GREEN, Ole
DK-6940 Lem St (DK)**

(74) Representative: **Hoffgaard Rasmussen, Martin
Otello Lawfirm
Christiansgade 24 A
8000 Aarhus C (DK)**

(56) References cited:
**WO-A1-2008/151635       FR-A1- 2 859 802
US-A- 4 184 159       US-A1- 2007 027 403
US-A1- 2010 148 959**

**Description**

**Field of the invention**

The present invention relates to wireless sensor networks and location determination of sensors in such networks, in particular when deployed in environments with heterogeneous RF wave transmission interface such as e.g. biomass. Location determination may also be referred to as localization.

**Background of the invention**

In many applications that benefit from the deployment of wireless sensor networks, each wireless sensor node in the network requires information about its location to properly interpret its own sensor data and to act according to its placement in the world and in the network. Most of the developed localization techniques such as range-based and range-free methods result in a relatively precise estimation of the location of the sensor nodes when the network is deployed in an environment with a homogenous transmission interface, e.g. air or water. The performance of such localization techniques does, however, significantly degrade when the network is deployed in an environment with a heterogeneous transmission interface, i.e. an interface with density variation over the space, e.g. biomass and other compounds of solids. Localization in heterogeneous environments is a major problem faced in important industrial and agricultural production activities, such as biomass production. Various heterogeneous transmission interfaces have different wireless signal properties but a common characteristic for all of them is that they interfere more with, e.g., radio signals than homogeneous transmission interfaces do, and in a less predictable way.

Prior art document US 418 159 discloses a controller for a wireless sensor, wherein the sensor is for embedding in a biomass, the controller configured to receive at least one biomass characteristic associated with the wireless sensor

It is an object of the present invention to overcome problems related to wireless localization in heterogeneous environments and provide a method for localization of wireless sensors in biomass as well as a wireless sensor network employing such a method.

**Summary of the invention**

The present invention relates to a method for determining the location of a wireless sensor embedded in a biomass, wherein the wireless sensor is within wireless communication distance of one or more wireless units, the method comprising:

-    receiving at least one biomass characteristic associated with the wireless sensor,
-    employing two or more location determination methods to determine two or more location estimate representations for said wireless sensor by cooperating with one or more of the wireless units, and
-    determining an enhanced location estimate for said wireless sensor by combining at least two of said two or more location estimate representations;
     whereby at least one of said determining an enhanced location estimate method step and said employing two or more location determination method step comprises using one or more of said at least one biomass characteristic.

By the present invention is provided a method that makes the determination of the location of a sensor (also referred to as "localization") in heterogeneous environments such as biomass practically feasible despite the numerous obstacles and limitations that biomass exhibits to localization as compared to homogeneous systems such as air or water.

The one or more wireless units may comprise three, four, or more wireless units to further improve the accuracy of the location determination.

According to the present invention, a localization of wireless sensors based on hybrid measurements can achieve a performance improvement over localization based on a single measurement type because measurement noise for different types of measurements comes from different sources. Therefore, by fusing the location estimate representations from the range-based localization methods, e.g. Received-Signal-Strength RSS or Time-of-Arrival (ToA), and the range-free based localization methods, e.g. N-Hop Multilateration, using e.g. a discrete-time Kalman filter, the precision of the location estimate in biomass, which comprises an environment with a heterogeneous transmission interface, will be enhanced. In addition, the problem of intermittent observations in a wireless sensor network generated due to the unreliability of the communication channels, especially in environments such as biomass, can be addressed by deploying the discrete-time Kalman filter at the sensors' level.

Furthermore, by taking account of biomass characteristics, i.e. actual physical parameters of the biomass enclosing the sensor, and interpreting the results of the two or more localization methods or their combined result according to these biomass characteristics, the localization is even further improved. The actual physical parameters may e.g. be temperature and/or humidity which are often measured by the sensor anyway as part of the sensor's biomass data acquisition task. In a preferred embodiment the biomass characteristics are used to select probable values for e.g. the RF wave propagation speed, the dielectric constant, a translation factor between network hops and e.g. meters, the vector norm used to calculate and interpret distances, and/or the reliability, weighting or variation of the different localization methods used.

According to the present invention the term biomass may refer to any heterogeneous environment that is mainly composed by organic material, e.g. a stack of silage, heaps of wheat, rice, potatoes, etc., bales of hay or straw, compost, manure, wood, e.g. wood chips, etc.

The wireless units may, according to the present invention, be any kind of wireless devices that can communicate with the wireless sensor in a way that is compatible with localization methods used in a specific embodiment of the invention. It follows that being within wireless communication distance highly depends on the specific methods, the wireless units and the wireless communication technology used, as well as the properties of the biomass embedding at least the wireless sensor. In a preferred embodiment there are several wireless units and several of them are themselves wireless sensors, so that possibly four or more wireless sensors cooperate with each other to determine their respective localizations. Within a preferred embodiment of a network comprising wireless sensors according to the present invention, one wireless unit is working as a wireless gateway to make the sensor data and estimated positions available. The wireless gateway may itself comprise a wireless sensor embedded in the biomass, but is preferably located outside the biomass and possibly comprising an absolute localization device, e.g. a GPS unit or means for storing a predetermined absolute position. When several of the wireless sensors have obtained their own locations by means of the present invention they can calculate their positions relative to the wireless gateway and thus also, when provided for by the wireless gateway, their absolute positions according to a local or worldwide grid.

With the present invention is also provided for an improved interpretation of biomass monitoring data with respect to the significance and reliability of certain data as well as at what specific location damage control should be deployed if relevant. For example, the knowledge of the spatial relationship between sensor data may make it possible to interpret the significance of the fact that some of the sensors are exceeding a data threshold, e.g. temperature. If the sensors are in the same area, the fact probably means that there is something definitely wrong in that area. If on the other hand the sensors are distributed throughout the biomass with several non-exceeding sensors in-between, the fact probably means that the entire biomass is close to a limit but not necessarily with a critical significance yet. With another example, the knowledge of the sensor locations means that it is easy to spot a sensor which transmits data that are considerably different to the data from its neighbours. Such a sensor could then simply be marked as unreliable, or the situation could relatively easily be investigated, and the sensor possibly be exchanged with a new one, as the sensor position is known. As a third example, the position information makes it easy to perform damage control, e.g. by removing a part of a stack of biomass that is decomposing too quickly so that the condition does not spread out to the rest of the stack, or e.g. pouring an anti-fungal drug over a pile of biomass, estimating the "shelf life" and thus determining which part of a silage stack to use first, determining optimal or even differentiated storage conditions for a tank of biomass based on representative tests instead of only a sample from the top layer, stirring and possibly adding an additive to a manure tank, finding a hole torn in a covering of a wheat heap, adding more compost worms or deciding to heat treating a pile of compost, using the sensor data for product or transport pricing and knowing at which positions to take out corresponding samples for documentation, etc.

The location estimate representations that are determined by the two or more localization methods may within the scope of the present invention comprise actual position coordinates (in a plane or in space) or other position references, or they may comprise information that can be converted to a position, e.g. a number of vectors, distances or angles to other wireless units, or a combination, thus allowing for converting the representation to a position coordinate by trilateration, triangulation or multilateration. The number of e.g. distances that are needed to do the conversion to a position depends on the conversion method and the accuracy of the measurements, as well as the requirements to type and accuracy of the position coordinate. For example two distances are sufficient to limit the possibilities to two coordinates in a plane when using trilateration, and three distances are sufficient to establish a single coordinate in a plane, or two possible coordinates in space. If the distance measurements are unreliable and/or inaccurate, it will improve the accuracy of the position coordinate to obtain distances to further wireless units. In a preferred embodiment of the invention the wireless sensor measures distances to four or five different wireless units whenever possible. When two wireless sensors within communication distance of each other need to measure the distance to each other for use in their respective localization efforts, the method of the present invention could either let one of them do the measurement and just forward the result to the other, which may save network traffic, processing power, time and/or battery, or it could let them both determine the distance, sharing the results with each other, and then use an average of the two measurements for the localization, thus taking advantage of the possibility of having two measurements made for the same distance.

When the localization estimate representations comprise information that can be converted to positions rather than the actual position coordinates, the actual positions may be calculated before combining the outcome of the different localization methods, or the information could be combined and the actual positions calculated from the combined information. For example, if the two localization methods both provide a set of 3 distances for trilateration as their location estimate representation, the corresponding distances may be combined to produce one set of 3 distances which can then be used for trilateration.

According to the invention, the consideration of biomass characteristics in the localization method may e.g. be implemented by using the biomass characteristic as a factor or for probability considerations, or by looking up a constant used in an equation in dependence of a biomass characteristic, e.g. changing the value of c, the speed of light, in accordance with the temperature or moisture, or by changing the equations used according to the actual biomass, or any other suitable way.

When the two or more location determination methods comprise a range-based location determination method and a range-free location determination method, an advantageous embodiment of the present invention is obtained. Such advantages can include using the prediction errors from one method to reduce the error of another method, thereby improving the overall precision of the system.

As range-based and range-free location determination methods in biomass typically have different error sources and reasons for uncertainties, the advantages of combining several location determination methods are further enhanced the location determination methods are selected such that at least one is a range-based method and at least one is a range-free method.

When said combining at least two of said two or more location estimate representations involves fusion by a discrete-time Kalman filter, an advantageous embodiment of the present invention is obtained. Such advantages can include using the biomass characteristic to reduce the error of one method, thereby improving the overall precision of the whole system.

According to a preferred embodiment of the present invention Kalman filter fusion is used to obtain the fastest and most accurate convergence towards reliable location estimates through iterations of the method.

When said range-based location determination method is based on a location determination method selected from a list comprising:

- Received Signal Strength (RSS),
- Time of Flight (ToF),
- Time Difference of Flight (TDoF),
- Time of Arrival (ToA),
- Time Difference of Arrival (TDoA),
- One-way trip measurements,
- Round trip measurements,
- RSS profiling, and
- Angle of Arrival (AoA),

an advantageous embodiment of the present invention is obtained.

The above-mentioned range-based location determination methods have different advantages and disadvantages, but are all suitable for use within the scope of the present invention. The choice of method may depend on several parameters such as the available processing power and memory, the time consumption and number of iterations necessary, the available measurements and prerequisites such as e.g. time synchronization between wireless units, accuracy of time stamps, resolution of signal strength measurements, etc. Moreover, certain range-based methods may favour certain kinds of biomass, making the selection depending on the specific application. In an embodiment of the present invention, several range-based methods are implemented and available in the wireless sensor at runtime, thereby enabling the processor to select or switch the method(s) to use based on field experience in the specific environment.

When said range-free location determination method is based on a location determination method selected from a list comprising:

- N-Hop Multilateration-based techniques, and
- One-hop lateration-based techniques,

an advantageous embodiment of the present invention is obtained.

The above-mentioned range-free location determination methods have different advantages and disadvantages, but are all suitable for use within the scope of the present invention. The choice of method and specific variant thereof may depend on several parameters such as the available processing power and memory, the time consumption and number of iterations necessary, the available measurements and prerequisites such as e.g. network topology and technology, the density of sensor distribution in the specific application, the desired limitation on network traffic to save power, etc. Moreover, certain range-free methods may favour certain kinds of biomass, making the selection depending on the specific application. In an embodiment of the present invention, several range-free methods are implemented and available in the wireless sensor at runtime, thereby enabling the processor to select or switch the method(s) to use based on field experience in the specific environment.

When one or more of said at least three wireless units comprise wireless sensors, an advantageous embodiment of the present invention is obtained.

According to a preferred embodiment of the present invention, most of the wireless units comprise sensors. For example, a wireless sensor network for use in monitoring a stack of silage may e.g. comprise 10 - 100 wireless sensors embedded in the silage and one wireless unit comprising a gateway outside the silage, and optionally one or two wireless units acting as wireless relays, also placed outside the silage. When said method is decentralized and carried out by the wireless sensor, an advantageous embodiment of the present invention is obtained. Such advantages can include the reliability of the system in terms of improved packaged delivery.

According to a preferred embodiment of the invention, the sensors have processors enabled to localize themselves primarily based on their network communication with their neighbours. Thereby the need for processing power is distributed, which would otherwise require a much more powerful and expensive processor at a central location, and the amount of network traffic over longer distances or several hops is effectively decreased.

When said method is centralized and carried out for several wireless sensors by a central unit such as a wireless gateway, an advantageous embodiment of the present invention is obtained. Such advantages can include a reduction of the overall power consumption of the system in some embodiments as the battery lifespan of an individual sensor operating in a centralized system can support longer processing time compared with using power for transmission of extra information along the sensor network in a decentralized system.

According to an embodiment of the invention, the location determination is carried out for all sensors centrally, thereby facilitating the use of cheap wireless sensors with very little processing power. The centralized localization also facilitates better or at least faster and easier use and re-use of data and measurements across the different localization tasks, thus enabling establishing a bigger perspective on the sensor network and the biomass environment.

When said at least one biomass characteristic comprises at least one of temperature, moisture content, humidity, density, dry matter content, salt content and pH-value, an advantageous embodiment of the present invention is obtained.

In a preferred embodiment of the present invention the biomass characteristics measured for tuning the localization are characteristics that are measured anyway for facilitating the biomass monitoring.

The step of receiving the biomass characteristic may comprise the wireless sensor sensing the characteristic related to its surrounding biomass.

The present invention further relates to use of a wireless sensor network for monitoring a biomass using a plurality of wireless units, wherein at least one of the wireless units is a wireless gateway and at least one is a wireless sensor, the method comprising:

- embedding the at least one wireless sensor in the biomass;
- determining an enhanced location estimate for the wireless sensor by using a method for location determination of a wireless sensor according to the invention,
- receiving at least one biomass characteristic from the wireless sensor,
- transmitting a representation of the enhanced location estimate and a representation of one or more of the at least one biomass characteristic to a biomass monitoring interface via the wireless gateway.

By the present invention is provided a smarter, easier, faster and more reliable way of monitoring biomass as the knowledge of the sensor positions enabled by the present invention has many advantages. The localized sensors for example enable a farmer to know exactly where in his silage stack the silage is decomposing abnormally, they enable the warning decision process to take spatial properties of the sensor data into consideration to e.g. consider several neighbouring sensors with abnormal data to be reliable, they enable better interpretation, weighting and omission of sensor data, e.g. when a sensor has been moved, etc. Further advantages of sensor localization obtained by the present invention are given above and below.

When said use includes repeating said step of determining an enhanced location estimate for the wireless sensor on the occurrence of one or more of the following events since the step was last carried out:

- a predetermined time has elapsed,
- a predetermined biomass characteristic such as e.g. temperature has changed more than a predetermined amount,
- a motion detector in the wireless sensor such as e.g. an accelerometer has detected a possible motion,
- a location estimate of a wireless unit presents it as a moving object,
- processor has determined that the last location estimate is indicative of the sensor having moved more than a predefined distance;
- a wireless communication property such as e.g. received signal strength has changed more than a predetermined amount, and

- a request to determine the location of the wireless sensor has been received.

According to a preferred embodiment of the present invention, the localization process is repeated at regular or dynamically determined intervals. After a first number of iterations by which location estimates of an acceptable reliability and accuracy have been obtained, the process can be carried out regularly to verify that the positions are not changing, or to learn how the changes in the biomass affects the localization methods. The intervals may be fixed or may be determined based on e.g. the specific application, the specific biomass, the localization history in the current application, etc. In a preferred embodiment, a new localization may also be triggered by certain events, e.g. as listed above. This may ensure that position changes or abnormal data measurements are detected and analysed relatively soon after their occurrence.

When said use of a wireless sensor embedded in a biomass includes:

- employing two or more location determination methods to determine two or more location estimate representations for said wireless sensor by cooperating with three or more of said at least four wireless units, and
- determining an enhanced location estimate for said wireless sensor by combining at least two of said two or more location estimate representations;
  whereby one or more of said at least one biomass characteristic is used in at least one of said determining an enhanced location estimate and said employing two or more location determination methods.

When said method for location determination of a wireless sensor embedded in a biomass implements a method according to any of the above, an advantageous embodiment of the present invention is obtained.

The present invention further relates to a controller for a wireless sensor, wherein the wireless sensor is for embedding in a biomass, the controller configured to:

receive at least one biomass characteristic associated with the wireless sensor;
determine two or more location estimate representations for said wireless sensor using at least properties of wireless communication between the wireless sensor and one or more wireless units; and
determine an enhanced location estimate for said wireless sensor by combining at least two of said two or more location estimate representations;

wherein the controller is configured to perform at least one of the determinations using said at least one biomass characteristic.

By the present invention is provided a controller for a wireless sensor which facilitates location determination in heterogeneous environments such as biomass in a practical and feasible way despite the numerous obstacles and limitations that biomass exhibits to location determination as compared to homogeneous systems such as air or water.

According to the present invention, a location determination of wireless sensors based on hybrid measurements can achieve a performance improvement over location determination based on a single measurement type because measurement noise for different types of measurements comes from different sources. Therefore, by fusing the location estimate representations from e.g. the range-based location determination methods, e.g. Received-Signal-Strength RSS or Time-of-Arrival ToA, and e.g. the range-free based location determination methods, e.g. N-Hop Multilateration, using e.g. a discrete-time Kalman filter, the precision of the location estimate in biomass, which comprises an environment with a heterogeneous transmission interface, will be enhanced. In addition, the problem of intermittent observations in a wireless sensor network generated due to the unreliability of the communication channels, especially in environments such as biomass, can be addressed by deploying the discrete-time Kalman filter at the sensors' level.

Furthermore, by taking account of biomass characteristics, i.e. actual physical parameters of the biomass enclosing the sensor, and interpreting the results of the two or more location determination methods or their combined result according to these biomass characteristics, the location determination is even further improved. The actual physical parameters may e.g. be temperature and/or humidity which are often measured by the sensor anyway as part of the sensor's biomass data acquisition task. In a preferred embodiment the biomass characteristics are used to select probable values for e.g. the RF wave propagation speed, the dielectric constant, a translation factor between network hops and e.g. meters, the vector norm used to calculate and interpret distances, and/or the reliability, weighing or variation of the different location determination methods used.

The controller may be remote from the wireless sensor or local to the wireless sensor. In this way centralized and decentralized systems can be provided that can enable at least some of the processing to be performed either remote from, or local to, the wireless sensor. The use of either a centralized or a decentralized system can be advantageously used in accordance with the available processing resource at the wireless sensor, the available power at the wireless sensor (which may be a battery), and/or any requirements that relate to transmitting from the wireless sensor.

When the localization estimate representations comprise information that can be converted to positions rather than the actual position coordinates, the actual positions may be calculated before combining the outcome of the different localization methods, or the information could be combined and the actual positions calculated from the combined information.

According to the invention, the consideration of biomass characteristics in the localization method may e.g. be implemented by using the biomass characteristic as a factor or for probability considerations, or by looking up a constant used in an equation in dependence of a biomass characteristic, e.g. changing the value of c, the speed of light, in accordance with the temperature or moisture, or by changing the equations used according to the actual biomass, or any other suitable way.

When the controller is configured to combine at least two of said two or more location estimate representations using a discrete-time Kalman filter fusion., an advantageous embodiment of the present invention is obtained.

According to a preferred embodiment of the present invention Kalman filter fusion is used to obtain fast and accurate convergence towards reliable location estimates through iterations of the method.

There may be provided a wireless sensor comprising any controller disclosed herein.

The wireless sensor may comprise one or more of:

one or more sensor devices configured to obtain at least one biomass characteristic;
a power supply; and
a wireless communication unit.

When said power supply comprises a battery, an advantageous embodiment of the present invention is obtained.

When said wireless sensor comprises a wireless unit, an advantageous embodiment of the present invention is obtained.

When said one or more sensor devices, the processor and the wireless communication unit cooperate in transmitting measured data to a wireless unit, an advantageous embodiment of the present invention is obtained.

In another embodiment at least one of the wireless units comprises a wireless relay unit or a gateway unit.

When said processor is arranged to apply a Kalman filter to the measured data prior to their transmittal to said wireless unit, an advantageous embodiment of the present invention is obtained.

In a preferred embodiment of the invention, a Kalman filter may be used to e.g. smoothen, improve, clean or even predict biomass data before they are transmitted to the gateway or other data gathering central device.

In one embodiment, the controller is incorporated into a wireless sensor which is part of a sensor network.

The present invention further relates to a wireless sensor network comprising at least four wireless units, wherein at least one of the at least four wireless units comprises a wireless sensor according to an embodiment of the invention as disclosed herein.

By the present invention is provided a novel wireless sensor network that is highly beneficial particularly for biomass monitoring purposes, as it enables localization of the sensors even in such complex, heterogeneous environments.

When at least one of the wireless units comprises a wireless relay unit or a gateway unit, an advantageous embodiment of the present invention is obtained.

The wireless relay units, which can be located outside the biomass, e.g. on top of a stack of silage, may be used for cooperation about localization by nearby wireless sensors, i.e. act as one of the at least 3 wireless units that are needed to localize a wireless sensor. In that way a number of components, which may be referred to as localization helpers, can be distributed if the density of embedded wireless sensors is a bit low. The wireless relay units may use e.g. a GPS unit to establish their own location and thereby support the localization of the wireless sensors and act as an anchor node. Besides acting as localization helpers the wireless relays may in an embodiment of the present invention significantly improve the network communication in the biomass as their preferred positions outside the biomass enables them to communicate with each other and the wireless gateway in a much more reliable way over much larger distances through the air. Both wireless relay units with or without sensors are within the scope of the invention.

There may be provided a wireless sensor network comprising any controller disclosed herein and one or more wireless sensors.

The wireless sensor network may comprise at least four wireless units. At least one of the wireless units may comprise the one or more wireless sensors.

The present invention further relates to a biomass with one or more wireless sensors according to any of the above embedded therein.

There may be provided a biomass with any wireless sensor disclosed herein embedded therein.

A biomass according to the present invention which embeds localizable sensors greatly improves the usability and convenience of biomass monitoring.

The drawings

The invention will in the following be described with reference to the drawings where

Figure 1 illustrates a block diagram of a biomass embedding wireless sensors according to an embodiment of the present invention,
Figure 2 illustrates a block diagram of a wireless sensor according to an embodiment of the present invention,
Figure 3 illustrates an embodiment of a wireless sensor,
Figure 4 illustrates a block diagram of a localization method according to an embodiment of the present invention,
Figure 5 illustrates a block diagram of a preferred localization algorithm according to an embodiment of the present invention,
Figure 6 illustrates a network with 6 wireless units, and
Figure 7 illustrates a wireless sensor network comprising wireless relay units according to an embodiment of the present invention.

**Detailed description**

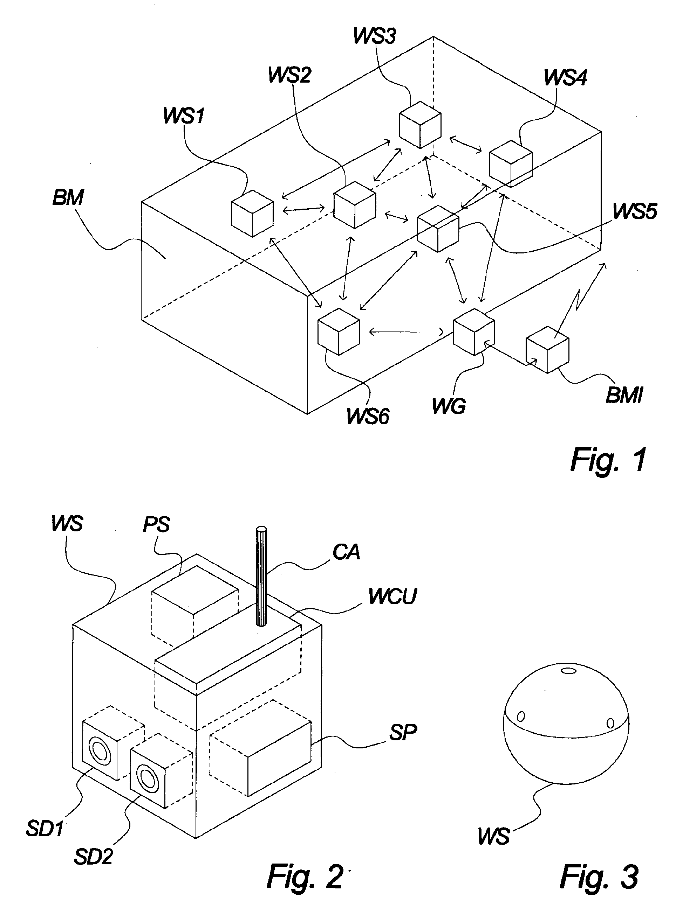

Fig. 1 illustrates a block diagram of a biomass BM embedding a plurality of wireless sensors WS1, WS2, ..., WS6 according to the present invention, further described below with reference to figure 2. A wireless gateway WG and a biomass monitoring interface BMI, possibly comprised in the wireless gateway, is also provided, preferably outside the biomass.

The biomass BM may comprise a compilation of any form of any heterogeneous environment that is mainly composed by organic material, e.g. a stack of silage, heaps of wheat, rice, potatoes, etc., bales of hay or straw, compost, manure, wood, e.g. wood chips, etc. Biomass is typically characterised by comprising a significant quantity of solids, which are typically capable of holding a variable amount of water or other liquids. Some biomasses include relatively large, air-filled spaces, when stacked, e.g. a heap of large potatoes, whereas most biomasses holds only little or no air.

The wireless sensors WS1, WS2, ..., WS6 are embedded in the biomass more or less arbitrarily. The distribution of the sensors may be organized by implanting them in the finally shaped biomass stack, or the sensors may simply be dropped into the biomass before or during the stacking, packing, piling, or wrapping, etc., causing the distribution to approach random. The wireless sensors have means for communicating with each other, with the wireless gateway WG, and/or with other network units, thus establishing a wireless sensor network of any suitable kind. The sensor network may be more or less organised, with none or any level of central control. In an embodiment of the present invention the wireless gateway WG may act as a common network controller for organising the wireless sensors, e.g. by assigning IP-addresses in an IP network configuration.

The wireless gateway WG is a network unit that avails access in some sense between the wireless sensors of the wireless sensor network and one or more external units. The wireless gateway WG may e.g. comprise a conventional wireless network gateway hardware for establishing access and routing between different networks, e.g. the wireless sensors with WiFi capabilities and the Internet or any other network, or e.g. a GSM or other cellular network communication unit. The wireless gateway WG may thus comprise one or more of the functionalities and tasks of conventional gateways, access points, routers, bridges, network address assigning or resolving, security controllers, web servers, etc. In a preferred embodiment, the wireless gateway WG also carries out the task of collecting and possibly refining data and information from the wireless sensors.

In addition the wireless gateway WG may comprise a wireless sensor or it may be a sensor-free unit entirely dedicated to collecting data from all the wireless sensors. The wireless gateway may further comprise positioning means for obtaining an initial position for itself, e.g. by means of a GPS unit which is feasible if located outside the biomass and heavy buildings or containers. The gateway may also be provided with its position manually by the user, or it may simply be defining the centre of the world as far as the wireless sensors are concerned, i.e. the origin or other reference position in their positioning grid.

The biomass monitoring interface BMI preferably comprises means for pre-processing the measured biomass data from the sensors as received by the wireless gateway WG. In that regard the biomass monitoring interface BMI is either comprised in or connected to the wireless gateway. The pre-processing may comprise coarse filtering to remove measurements that are clearly wrong, or interpolation means to estimate missing measurements. Further pre-processing may comprise averaging, pattern recognition, critical condition detection, preparation of data summaries, conversion to other data formats or reporting in common file formats, predicting future variations and possible conditions, suggesting a suitable damage control or preventive action, etc. In a simple implementation of the wireless gateway and biomass monitoring interface the data are simply forwarded more or less unprocessed to further processing by the user or other means, e.g. by data network, telecommunication, etc.

In a more advanced embodiment, the biomass monitoring interface BMI processes the data to a degree that allows it to only forward messages if the situation has changed, is changing, or could be predicted to change to the worse. Hence, the only output from the biomass monitoring interface BMI to the user is messages when something is wrong, e.g. transmitted by means of short text messages SMS from a cell phone GSM module, and possibly a message at regular intervals, e.g. weekly, to indicate that everything is working fine. The biomass monitoring interface could also be a passive component in the sense that it collects and pre-processes data but only transmits data upon request from the user, or when an alarm condition occurs.

It is noted that some pre-processing tasks may also be allocated to the wireless sensors, e.g. the filtering out of entirely wrong measurements (for example by comparing measured values with threshold levels), the estimation of missing measurements, e.g. by Kalman filtering, or e.g. a rule of only sending data to the gateway if they exceed predetermined thresholds.

Figure 2 illustrates a block-diagram of a wireless sensor WS according to an embodiment of the present invention. The wireless sensor is in a preferred embodiment a high-grade implementation and protected in a durable enclosure of a suitable shape, e.g. spherical or egg-shaped, so that it can sustain impacts, great force, humidity and harsh chemical environments, etc., i.e. situations it will typically be exposed to for shorter or longer time within the biomass or in handling or refinement machines that are used to handle the biomass. An example of a preferred sensor embodiment and its deployment in a silage monitoring system is disclosed in the patent application WO 2008/151635 A1 which has an inventor in common with the present invention.

The wireless sensor WS comprises one or more sensor devices SD1, SD2, which are used to measure or otherwise acquire data representing physical and chemical properties of the surrounding biomass, the data e.g. being temperature, humidity or moisture, pH-value, salt content, etc. The sensor devices are the main purpose of the wireless biomass sensor as its purpose is to gather data for monitoring the condition of the biomass, e.g. if it is decomposing too fast, or if it is not getting sufficiently hot for exterminating organisms and e.g. snail eggs, etc. Suitable sensor devices and the sensor tasks are however extensively elaborated in the prior art and the skilled person will therefore know how to implement and use that part of a wireless biomass sensor for use in an embodiment of the present invention.

The wireless sensor further comprises a sensor processor SP for pre-processing data from the sensor device, and a wireless communication unit WCU for communicating the data to a suitable user. The processor may be any kind of processor suitable for carrying out the tasks of a specific embodiment of the present invention, e.g. central processing units CPU, digital signal processors DSP, programmable gate arrays PGA, and the like. The wireless communication unit WCU may comprise any suitable wireless communication technology, e.g. according to the IEEE 802.11 standards also referred to as WiFi, or any other means of radio frequency RF communication. In the block diagram of figure 2 is illustrated a communication antenna CA connected to the wireless communication unit WCU. It is noted that any antenna technology and any practical implementation of it, as well as any suitable placement of the antenna is within the scope of the present invention. In a preferred embodiment the data are transmitted to a wireless gateway WG, possibly via other wireless sensors if the distance to the gateway is too long, and the wireless gateway preferably makes the data available in some form to a user through a biomass monitoring interface BMI as illustrated in figure 1. Implementations for transmitting data to the wireless gateway via other wireless sensors is well known, for example as disclosed in the paper by Esmaeil S. Nadimi, Henning T. Søgaard (2009), "Observer Kalman filter identification and multiple model adaptive estimation based classification of animal behaviour using wireless sensor networks" from Computers and Electronics in Agriculture. Volume: 68, Issue: 1. 9-17.

The wireless sensor also comprises a power supply PS, which typically comprises some kind of battery unit. In a preferred embodiment, the power supply may comprise a bio process energy device that generates electricity from one of the energy types inherent in the biomass that surrounds the sensor. Any other power supplies like e.g. fuel cells, solar panels, power bus connection, etc., are within the scope of the present invention although not all power supplies are suitable for all applications of the present invention. The power supply is used to power the sensor devices, processor, wireless communication unit and other electrical circuits of the wireless sensor.

Besides the above-mentioned components, the wireless sensor may further within the scope of the present invention and to the extent necessary by certain embodiments also comprise further components such as e.g. volatile (e.g. RAM, etc.) and non-volatile (e.g. ROM, flash-memory, etc.) memory, further or other processors or programmable circuits, other communication means (e.g. wired network communication), timers, oscillators, motion detectors, or any other helper device or circuit.

Figure 3 illustrates a wireless sensor WS of an embodiment of the invention with a more practical shape than illustrated in the block diagram of figure 2. In a preferred embodiment the shape of the wireless sensor is spherical as shown in figure 3 or shaped like other rounded objects like an ellipsoid or ovoid. The communication antenna CA and other components are preferably protected inside the enclosure, even though small openings as illustrated in figure 3 or protrusions may be necessary for the sensor devices and a possible bio process power supply to make contact to their sources.

According to a wireless sensor of an embodiment of the present invention, the sensor processor SP in addition to the above-mentioned functionality is further arranged to process algorithms for localizing the wireless sensor. In a preferred embodiment of the invention this is performed by means of different methods involving communication with other wireless sensors or wireless units, e.g. the wireless gateway, and even preferably incorporating measured biomass characteristics in the localization algorithm.

To save battery power and reduce network traffic, the wireless sensors are in a preferred embodiment of the invention not performing localization continuously. It follows from the nature of most applications of biomasses where monitoring can be relevant, i.e. typically storage, decomposing, or transportation applications, that the biomass is not stirred or otherwise manipulated for long time periods. It may thus for most biomass applications be safe to assume that a location estimate obtained for a wireless sensor stays valid for a long time, in some applications possibly even weeks or months. Hence, after having performed a number of localization iterations so that the location estimates are obtained with a satisfactory reliability, it is beneficial and entirely sufficient to only carry out verification of the localization once in a while, at predetermined or dynamically determined times. In a preferred embodiment verification of the localization is carried out at regular intervals depending on the reliability and history of previous localization attempts, but in addition or instead several alternative ways to determine when a renewed localization should be performed are within the scope of the present invention. The localization or a part of it sufficient for a certain degree of verification, could be carried out, e.g. at regular intervals, i.e. when a predetermined time has elapsed, e.g. a day or a week, when a predetermined biomass characteristic such as e.g. temperature has changed more than a predetermined amount which could indicate that something is much different than assumed, when a motion detector in the wireless sensor such as e.g. an accelerometer has detected a possible motion, when a localization estimate indicates that a sensor is moving, when a wireless communication property such as e.g. received signal strength has changed more than a predetermined amount thus indicating that the position relative to another wireless unit has changed, when a request is received from the user, typically via the biomass monitoring interface and gateway, to localize the wireless sensor, or any other suitable trigger. The localization verification or renewal could be carried out for all sensors always, or it could be sensor-dependent, so that each sensor decides when to localize, and/or depending on the trigger, only sensors that pulled the trigger are re-localized. For example, when accelerometers in a few of the sensors indicate a motion, one embodiment of the invention could be arranged to decide to carry out localization of only those sensors, whereas an alternative embodiment of the invention could be arranged to renew the localization of all sensors for the sake of complete certainty.

In a preferred embodiment, the sampling and/or communication frequency varies. At the beginning when the wireless sensor positions are unknown or only coarsely estimated the sampling and/or communication frequency will be high to stabilize the localization process, i.e. to pass the transient response of the process estimating the location. Later on, depending on the rate at which the localization estimates stabilizes, the sampling will be reduced. When a sensor measurement is observed or classified as abnormal, the sampling and/or communication frequency will again be increased to detect abnormalities to either decide that the abnormal data indicate a change in the biomass, e.g. the start of a decomposition process, or to rule out the sensor readings as erroneous.

Wireless sensor networks and localization are known subjects and a lot of work has been done in both fields. The work has, however, almost exclusively been done using air as the transmission media. Air can be regarded as a homogenous medium when considered over the relatively short distances of wireless sensor network communication and localization. The behavior of radio waves in air is very close to that of radio waves in a vacuum. This means that the properties of a signal travelling in air can in theory be accurately described by well-defined formulas found in most physics books.

It has been found, however, that this is not the case when using a heterogeneous material as the transmission medium. In a heterogeneous material the radio frequency characteristics within a region of the material will be determined by the dielectric constant of that region. As the electromagnetic wave travels through the changing regions it will be affected by refraction, reflection and diffraction differently depending on the frequency of the signal and the size of the regions. This can lead to excessive dampening, severe multi-pathing, changing signal propagation speeds and other similar phenomena and therefore inaccuracies in the determination of the location of the sensor.

The inventors have found that a further complication is that regarding the properties of a heterogeneous material, especially a biological material, as static will lead to estimation errors because global or local changes can affect the regions differently. Over time temperature might change differently in parts of a material, water content might change and so forth. Each of these changes will potentially alter the RF properties of the material. This has to be taken into account to avoid increasingly large errors in the estimation of the location of the sensor.

In the case of, e.g., a silage stack variations in density, moisture content, salinity and temperature are all factors in determining the dielectric constant of an area of the stack. These parameters can differ significantly throughout a stack, as an example density can differ with a factor of four.

Deploying existing wireless sensor network and localization solutions in an environment that is so radically different from air would yield significant errors. Received signal strength (RSS) measurements are already infamous for being inaccurate and changing even in air. If deployed in e.g. silage or other biomasses without taking the heterogeneous properties of the material into account the measurements could not be related to range. All methods relying on time-of-flight (TOF) would be affected as well, be it time-of-arrival (TOA), time-difference-of-arrival (TDOA) or two-way-ranging. As the dielectric constant changes so does the speed of light and thus the TOF. Furthermore, existing TOF-based systems rely on the high bandwidths available in the 2.4 GHz band. It is well-known that in the RF range high frequencies generally are worse at penetrating material than lower frequencies and as such a lot of range is lost when using 2.4 GHz systems compared to 433 MHz systems. An angle-of-arrival (AOA)-based system would also face severe challenges if employed unaltered in biomasses, e.g. silage. AOA-systems rely on measuring the angle of the incident wave. This is highly reliant of line of sight (LOS) and that only limited multipathing is present. In e.g. silage there is no line of sight and severe multipathing. As there is no line of sight it would be extremely difficult to predict which of the multipaths is the correct one.

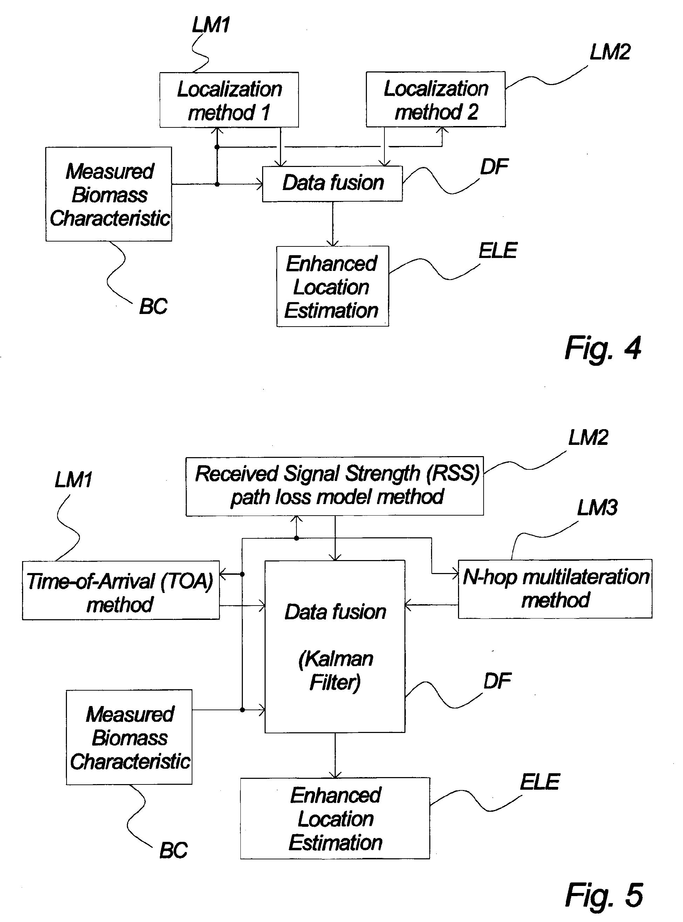

To solve these problems and facilitating localization despite the heterogeneous environment of biomass, the wireless sensor according to an embodiment of the present invention determines its location relative to other sensors by combining two or more localization methods and further enhancing the result by current knowledge of properties of the biomass environment, e.g. the temperature or moisture content. Figure 4 illustrates a block diagram of a preferred localization method according to an embodiment of the present invention. In a preferred embodiment the localization method is carried out by the sensor processor SP, which can use nearby wireless units and communication measurement data from the wireless communication unit WCU, and possibly also from the sensor devices SD1, SD2 or other sources of biomass characteristics. Two different localization methods LM1, LM2 are carried out. The localization methods should preferably be chosen so that their error sources are as uncorrelated as possible, e.g. by relying on different unknown communication properties among the several unknowns in a heterogeneous biomass environment. For example, methods that may complement each other well may comprise a range-based and a range-free method, or a distance-based and a strength-based method, etc. Examples of possible localization methods comprise: Range-Based localization techniques such as Time of Arrival (ToA), Time Difference of Arrival (TDoA), Roundtrip time of arrival and Received Signal Strength (RSS). Range-free localization techniques such as one-hop multilateration and N-hop multilateration.

In a practical situation, and certainly if the sensors are embedded in biomass, the results of the two methods LM1, LM2 will probably be different. These results are fed to a data fusion block DF. In its simplest form this could just be an averaging block with or without memory, with or without weighting, e.g. implemented as different kinds of FIR or IIR filters. More advanced implementations of the data fusion block comprises e.g. Kalman Filters, Bayesian Networks, Dempster-Shafer theory, pattern recognition, classification, Neural networks or fuzzy logic. The output of the data fusion block is used for an enhanced location estimation ELE, i.e. being enhanced when compared to the individual localization methods LM1, LM2.

The outputs of the localization methods LM1, LM2 are localization estimate representations, i.e. either location estimates or parameters used to establish a location estimate, e.g. distance estimates between the wireless sensor and 3 other units. In the first case, the data fusion block outputs a location estimate based on the two (or more) location estimates received from the localization methods LM1, LM2. In the latter case, the data fusion block fuses corresponding parameters, e.g. distance estimates for the same other unit, so that the output of the data fusion block also comprises e.g. 3 distance estimates, which the enhanced location estimation ELE can use to derive an enhanced location estimate, e.g. by trilateration. In the latter case, the parameters could also be e.g. directions or angles to other units, which can also be used to establish a location estimate.

According to a preferred embodiment of the present invention, the localization methods LM1, LM2, as well as the data fusion block DF may also receive measured biomass characteristics BC. Whether or not it is feasible to consider biomass characteristics depends on the specific localization methods, but in an unpredictable and heterogeneous environment such as biomass, most localization methods have unknowns that can be estimated a bit more reliably when certain biomass characteristics are known, e.g. the temperature or moisture content. In the data fusion block the biomass characteristics may be used for pre-processing or weighting the data from the different localization methods, e.g. if it is known that localization method 1 becomes increasingly unreliable with increasing temperature, or that e.g. a propagation speed constant used in localization method 2 is increased by a percentage for each doubling of moisture content.

It is noted, that the illustration of two localization methods in figure 4 is only for exemplifying a simple embodiment. Any number of localization methods is within the scope of the invention, and a preferred embodiment of the present invention is improved by utilizing three localization methods as described below.

Figure 5 illustrates a block diagram of a localization algorithm of an embodiment of the present invention which fuses the results of three localization methods LM1, LM2, LM3, together by means of a discrete-time Kalman filter DF. The three preferred localization methods utilized by the algorithm of figure 5 are two range-based methods, time-of-arrival (TOA) and received-signal-strength (RSS), and a range-free method, n-hop multilateration. Note that the inventors have identified variables, terms or equations in all the methods, as indicated in more detail below, that should be adapted for use in a specific heterogeneous environment such as a specific kind of biomass Any adaptation to tune the methods to specific heterogeneous properties or environments are within the scope of the present invention. It is further noted that any combination, e.g. by Kalman fusion, of any localization methods for localization of wireless sensors in biomasses are within the scope of the present invention.

An RSS profiling localization technique, which is a range-based method, may be adapted according to the following for use in an embodiment of the present invention: Each wireless sensor estimates its distance to a wireless unit, e.g. a different wireless sensor or the wireless gateway, based on the received signal strength indicator (RSSI). In order to estimate the distance between a transmitter and a receiver, the *log-distance path loss model* that has been used extensively in the literature is:

$$\overline{PL}(d) = \overline{PL}(d_0) - 10n \log\left(\frac{d}{d_0}\right) \qquad (1)$$

where n is a path loss exponent which indicates the decreasing rate of signal strength in an environment, do is a reference distance which is close to the transmitter, and d is the distance between the transmitter and receiver, i.e. the distance to another wireless unit of which an estimate is needed to determine a location estimate. The path loss function expresses the signal strength measured in *dB*. The path loss $\overline{PL}(d)$ is e.g. calculated by obtaining transmission strength information from the other wireless unit and subtracting the reception strength measured by the wireless communication unit in the wireless sensor. The difference between the transmission and reception strengths indicates the path loss between those two positions.

In general, the exponent n is environment-dependent. In a free space, n is close to 2. In more complicated environments n will be larger. A suitable n for a certain biomass can be determined by testing at different conditions and then applying an n suitable for the current conditions of a specific biomass. Testing may also reveal at which environmental changes, e.g. temperature, moisture, etc., the exponent n should be changed in the algorithm. A typical value of n for some kinds of biomasses, including silage, can vary between a factor of 2 and 8. Note that the model in Eq. (1) does not consider the factors in the surrounding environment, such as interference, multipath, and fading, and thus the path loss can only be considered as an average value. To take these factors into consideration, it has been shown that the received signal strength usually demonstrates a Gaussian normal distribution with a mean of $\overline{PL}(d)$. Hence, a probabilistic approach can be taken and the path loss be modeled as a random variable $\overline{PL}(d)$ by adding a zero-mean, variance Gaussian random variable

$N[0,\sigma]$ to it:

$$PL(d) = \overline{PL}(d) + N[0,\sigma]$$

$$PL(d) = \overline{PL}(d_0) - 10n \log\left(\frac{d}{d_0}\right) + N[0,\sigma] \qquad (2)$$

$$PL(d) = N\left[\overline{PL}(d_0) - 10n \log\left(\frac{d}{d_0}\right), \sigma\right]$$

As a result, given that the other wireless unit is at a distance of d from the wireless sensor, the probability that the observed path loss *PL(d)* equals L is

$$\text{Prob}(PL(d) = L) = \frac{1}{\sigma\sqrt{2\pi}} \exp\left(-\frac{(L - \overline{PL}(d))^n}{2\sigma^2}\right) \qquad (3)$$

Since the path loss is modeled as a random variable, each possible value of L will be associated with a probability. Given any L a possible distance x from the wireless sensor to the other wireless unit can be derived from Eq. (1):

$$L = \overline{PL}(d) - 10n \log\left(\frac{x}{d}\right) \qquad (4)$$

Hence, the probability that the detected distance is x given that the actual distance is *d* can be calculated using Eq. (5), the Gauss error function (*erf*(.)) and the complementary error function (*erfc*(.)) and is presented by Eq.(6):

$$\text{Prob}(\text{distance} = x) = \text{Prob}(PL(d) = L)$$

$$\text{Prob}(\text{distance} = x) = \frac{1}{\sigma\sqrt{2\pi}}\exp\left(-\frac{(L - \overline{PL(d)})^n}{2\sigma^2}\right) \qquad (5)$$

$$erf(x) = \frac{2}{\sqrt{\pi}}\int_0^x \exp(-x^2)dx$$

$$\text{Prob}(\text{distance} = x) = \frac{1}{\sigma\sqrt{2\pi}}\exp\left(-\frac{\left(10n\log\left(\frac{x}{d}\right)\right)^2}{2\sigma^2}\right)\frac{10n}{x} \qquad x \in (0,\infty) \quad (6)$$

Using this technique, a probability distribution function of the distance is calculated and a curve that defines the probability that the wireless sensor is within the distance x from the other wireless unit is obtained. The distance with the highest probability is used together with highest probability distances to other units to define the location of the wireless sensor. Having distance estimates from different wireless units will result in forming an area with boundaries that maximizes the probability of the presence of the wireless sensor being located within those boundaries. The center of gravity of that region with the boundaries defines the most probable location of the wireless sensor.

The above algorithm is a relatively simple method considering only a varying n other than 2. As n changes within biomass from a point to another one, the equations will change significantly. Current biomass characteristics measured by the sensor are preferably used to tune n and other parameters during use. The algorithm could be further adapted to accommodate further properties of heterogeneous environments.

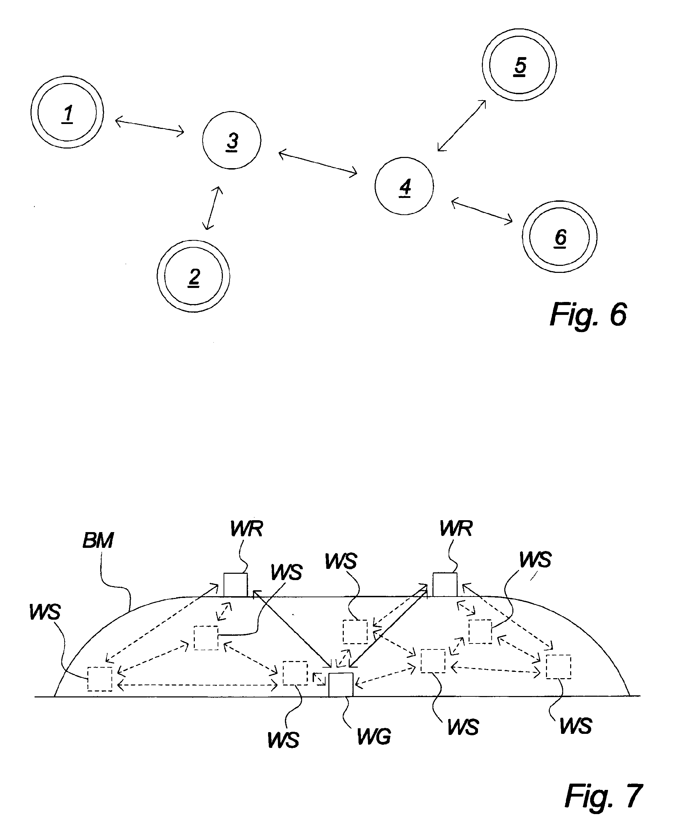

A range-free localization method that is preferably utilized for combination with other methods as described above is an N-hop multilateration localization technique. Figure 6 illustrates a wireless network with 6 wireless units 1 - 6. The communication paths in the network are illustrated by lines with arrows. The location of wireless units 1, 2, 5 and 6 (indicated by a double circle) have already been determined, e.g. by knowledge or previous estimates, whereas no location is determined for the wireless units 3 and 4. As known from wireless communication grid theory, collaborative subtrees are defined and initial position estimates determined, e.g. as mean values of the positions estimates for surrounding wireless units. Whereas the initial estimates may have a sufficient effect on the number of iterations necessary, they are not very important in terms of the final accuracy of the estimations, as the localization method of the present invention makes the estimates converge towards the true positions. Location estimates for the wireless units 3 and 4 can be computed at a central point or decentralized in each of the wireless units. The edges of the computation subtree give a well-determined or over-determined set of equations, which can be solved using non-linear optimization. The non-linear set of equations for the network in figure 6 is shown in the equation below. The objective is to minimize the residuals between the measured distances between the wireless units and the distances computed using the wireless unit location estimates. In this regard distances or coordinates are translated from hops to e.g. meters either before or after solving the below optimization problem. The distance in e.g. meters that corresponds to 1 hop is chosen in dependency of the specific biomass, as well as the network topology and technology. It is further noted that, as with the other localization methods described above and below, the definition of distance in this regard and thus also the related calculations depend on the chosen vector norm, e.g. taxicab distance $l^1$, Euclidian distance $l^2$, Chebyshev distance $l^\infty$ or any other norm, e.g. $l^{2/3}$, as well as the number of vector dimensions. The choice of vector norm to use for distance calculations also depends on the specific biomass. The Euclidian distance is used as norm in the present example, which is furthermore 2-dimensional for the sake of simplicity.

$$f_{2,3} = R_{2,3} - \sqrt{\left((x_2 - ex_3)^2 + (y_2 - ey_3)^2\right)}$$

$$f_{3,5} = R_{3,5} - \sqrt{\left((x_5 - ex_3)^2 + (y_5 - ey_3)^2\right)}$$

$$f_{4,3} = R_{4,3} - \sqrt{\left((ex_4 - ex_3)^2 + (ey_4 - ey_3)^2\right)} \qquad (1)$$

$$f_{4,5} = R_{4,5} - \sqrt{\left((x_5 - ex_4)^2 + (y_5 - ey_4)^2\right)}$$

$$f_{4,1} = R_{4,1} - \sqrt{\left((x_1 - ex_4)^2 + (y_1 - ey_4)^2\right)}$$

The $R_{i,j}$ quantities represent the measured distances between two wireless units and the quantities under the square root indicate the estimated distances. $f_{i,j}$ quantities represent the residual between the measured and estimated distances. The objective function is to minimize the mean-square error F over all equations:

$$F(x_3, x_4, y_3, y_4) = \min \sum f_{i,j}^2 \qquad (2)$$

The solution to this optimization problem can be obtained using some of the standard least squares methods or a Kalman filter, and the result is a set of coordinate estimates for each of the wireless units for which locations were unknown or inaccurate.

A further range-based localization technique in a preferred combination of methods is a time-of-arrival (TOA) method. To illustrate this method a 2-dimensional localization task with a wireless sensor with unknown position and M other wireless units is considered in the possibly no line of sight (NLOS) condition. The wireless sensor and units are equipped with wireless communication units capable of measuring time-of-arrival (TOA).

Let x be the wireless sensor position to be determined and $x_i$, $i = 1, 2, ..., M$ be the known position of the $i$ th other wireless unit. First, with a line of sight and in the absence of measurement noise, the time-of-arrival (TOA) at the $i$ th other wireless unit, which is denoted by $\tau_i$, is

$$\tau_i = \frac{d_i^o}{C} \qquad i = 1, 2, \ldots, M \qquad (1)$$

where $d_i^o = \|x - x_i\|_2$ is the distance between the wireless sensor and the ith other wireless unit, with $\|.\|_2$ representing the Euclidean norm, and C is the chosen signal propagation speed. In this method, the signal propagation speed and the dielectric constant should be selected with regard to the specific biomass, preferably by taking account of biomass characteristics currently measured by the sensor. For example the propagation speed may vary with a factor of 4. Obviously, the TOA, $\tau_i$, can easily be converted to distance by multiplying C.

In practice, however, the distance measurements, which are denoted by $d_i$, are subject to disturbance and are modeled as:

$$d_i = \begin{cases} \|x - x_i\|_2 + \varepsilon_i & (\phi_i = 0) \\ \|x - x_i\|_2 + \varepsilon_i + \eta_i & (\phi_i = 1) \end{cases} \qquad i = 1, 2, \ldots, M \qquad (2)$$

where $\varepsilon_i$ is the measurement error, $\eta_i$ is the error induced by no line of sight (NLOS), and $\phi_i$ is the NLOS existence variable at the $i$th BS. The $\varepsilon_i$ is a zero mean white Gaussian variable with known variance $\sigma_i^2$. The distance measurement corresponds to LOS and NLOS propagation when $\phi_i = 0$ and $\phi_i = 1$, respectively. It is assumed that $\eta_i$ is a positive random variable with a known probability density function (pdf), which is denoted by $p(d_i)$, and its value is much larger than $d_i^o$ and $|\varepsilon_i|$. It is also assumed that $\{\varepsilon_i\}$, $\{\phi_i\}$, and $\{\eta_i\}$ are independent. Assuming that $d_i^o$ and $\varepsilon_i$ are negligible, the observed measurements of Eq. (2) can then be well approximated by:

$$d_i = \begin{cases} \|x - x_i\|_2 + \varepsilon_i \\ \eta_i \end{cases} \quad \begin{pmatrix} \phi_i = 0 \\ \phi_i = 1 \end{pmatrix} \quad i = 1, 2, \ldots, M \qquad (3)$$

Let the probability of NLOS propagation at the $i$ th BS be $p(\phi_i = 1) = q_i$, which in turn means, that $p(\phi_i = 0) = 1 - q_i$. It is assumed that $\{q_i\}$ are known a priori, and their values are sufficiently small such that it is very likely that there are at least three LOS measurements. That is, the NLOS measurements will not be involved for position estimation in this methodology. It is important to point out that $\{\sigma_i^2\}$, $\{q_i\}$ and the NLOS distribution can be acquired from field tests. In the field tests, the MS location is known, which means that its true distances between the BSs are available. For each path measurement between the MS and a BS, it can easily be distinguished whether it corresponds to LOS or NLOS propagation. Hence, it is detected as a LOS path if the corresponding derived distance is comparable with the true value, assuming that the disturbance in the LOS scenario is sufficiently small. Otherwise, the path is identified as an NLOS measurement because it largely deviates from the ideal LOS path. Based on the LOS/NLOS identification results from a large number of trials, the empirical probabilities for $\{q_i\}$ can be obtained, while the NLOS distribution is deduced from the identified NLOS measurements. Moreover, $\{\sigma_i^2\}$ can be estimated with the use of the identified LOS measurements and their corresponding noise-free distances. Given the distance measurement vector $d = [d_1, d_2, \cdots, d_M]$, as well as the NLOS probability and pdf, the task is to find $\phi = [\phi_1, \phi_2, \cdots, \phi_M]$ and x. This can be done by solving an optimization problem in a vector space (set of equations).

With a set of distance estimates x from at least 3 different wireless units trilateration can be used to determine the location estimate of the wireless sensor by forming an area with boundaries that maximizes the probability of the presence of the wireless sensor being located within those boundaries. The center of gravity of that region with the boundaries defines the most probable location of the wireless sensor.

In a preferred embodiment of the invention, the localization algorithm is decentralized and is thus carried out by the wireless sensors themselves, or at least in a selected number of wireless sensors. The decentralized algorithm drastically reduces the network traffic as compared to a system where all sensors need to transmit their raw communication measurements data to a central localization unit e.g. the gateway, which calculates the location estimates for all sensors. The reduced amount of network communication means less battery consumption in the sensors and no unreliable long-distance or multi-hop communication of large data amounts other than the biomass measurements themselves to the gateway.

In an alternative embodiment of the invention, the wireless sensors are only equipped with simple, cheap processors which can only manage to collect data, but do not have the processing power to determine their own positions. Instead the gateway or other central unit receives communication characteristics such as signal strengths or time-of-arrival from all of the sensors along with their sensor data, and determines the positions for all. Thereby only one or a few wireless units, e.g. the gateway, need a powerful processor.

In an alternative embodiment of the invention, some wireless sensors do not comprise the means for localization or for performing the necessary measurements for a central localization unit to do it. Hence, some sensors of the network simply have entirely unknown positions, or are approximately localized by simply determining which of the localization-enabled wireless sensors that feel nearest in terms of e.g. easiest communication or strongest signal.

In an alternative embodiment of the invention, some wireless sensors do only comprise the means for localization or for performing the necessary measurements for a central localization unit to do it. Hence, some sensors of the network simply have entirely known positions, called anchor nodes.

Fig. 7 illustrates an elongated stack of biomass BM, e.g. silage or potatoes. A number of wireless sensors WS are embedded in the stack, as indicated by boxes with dashed lines. A wireless gateway WG is located outside the stack. The wireless sensors WS communicate with each other in order to localize themselves. According to a preferred embodiment of the invention, each wireless sensor should be within wireless communication distance of at least 3 wireless units in order to establish an enhanced location estimate according to the present invention. Moreover, the wireless sensors transmit measurement data and their enhanced position estimates to the wireless gateway, possibly via multiple hops through other wireless sensors. As the wireless communication distance within the biomass is typically very low, it may require numerous hops to reach the wireless gateway, and it may be difficult to find 3 wireless sensors to cooperate with about the localization.

Hence, in the embodiment of figure 7 is provided a number of wireless relay units WR located on top of the biomass stack. The wireless relay units may be used for cooperation about localization by nearby wireless sensors, i.e. act as one of the at least 3 wireless units that are needed to localize a wireless sensor. In that way, the wireless relay units can be considered as a number of localization helpers, which can be distributed if the density of embedded wireless sensors is a bit low, or randomness has caused a low density in certain regions of the biomass stack. The wireless relay units WR may comprise an external localization means such as e.g. a GPS unit, which will work because it is located outside the biomass, to establish their own location and thereby support the localization of the wireless sensors. Moreover, if a sensor network comprises two devices with a GPS or like absolute localization means, the relative localization of wireless sensors is simplified, as directions can be derived from two absolute positions. Besides acting as localization helpers the wireless relays may significantly improve the network communication in the harsh environment as their positions outside the biomass enables them to communicate with each other and the wireless gateway in a much more reliable way over much larger distances through the air. Hence, data communication from wireless sensors located far away from the gateway may avoid multiple network hops if being relayed by the wireless relay units instead of by other embedded sensors. In a preferred embodiment the wireless relay units are specialized unit which do not comprise sensor devices or other sensor specific implementations, but it is noted that the wireless sensors may also act as wireless relay units within the scope of the invention.

**Claims**

1. A controller for a wireless sensor, wherein the wireless sensor is for embedding in a biomass, the controller configured to:

   receive at least one biomass characteristic associated with the wireless sensor;
   **characterized in that** it is further configured to
   determine two or more location estimate representations for said wireless sensor using at least properties of wireless communication between the wireless sensor and one or more wireless units; and
   determine an enhanced location estimate for said wireless sensor by combining at least two of said two or more location estimate representations;
   wherein the controller is configured to perform at least one of the determinations using said at least one biomass characteristic.

2. The controller according to claim 1, wherein the controller is remote from the wireless sensor.

3. The controller according to claim 1, wherein the controller is local to the wireless sensor.

4. The controller according to any preceding claim, wherein the controller is configured to combine at least two of said two or more location estimate representations using a discrete-time Kalman filter fusion.

5. The controller according to any preceding claim wherein said controller is further configured to apply a Kalman filter to the biomass characteristic.

6. The controller according to any preceding claim wherein at least one of the wireless units comprises a wireless relay unit or a gateway unit.

7. A wireless sensor comprising the controller according to any preceding claim.

8. The wireless sensor according to claim 7, wherein the wireless sensor comprises:

one or more sensor devices configured to obtain at least one biomass characteristic;
a power supply; and
a wireless communication unit.

9.  A wireless sensor network comprising:

    a controller according to any one of claims 1 to 6; and
    one or more wireless sensors.

10. The wireless sensor network of claim 9, comprising:

    at least four wireless units;
    wherein at least one of the wireless units comprises the one or more wireless sensors.

11. The wireless sensor network according to claim 10, wherein at least one of the at least four wireless units comprises a wireless gateway.

12. A biomass with one or more wireless sensors according to any of the claims 7 to 8 embedded therein.

13. A method for determining the location of a wireless sensor embedded in a biomass, wherein the wireless sensor is within wireless communication distance of one or more wireless units, the method comprising:

    - receiving at least one biomass characteristic associated with the wireless sensor,
    **characterized in that** the method further comprises:
    - employing two or more location determination methods to determine two or more location estimate representations for said wireless sensor by cooperating with one or more of the wireless units, and
    - determining an enhanced location estimate for said wireless sensor by combining at least two of said two or more location estimate representations;
    whereby at least one of said determining an enhanced location estimate method step and said employing two or more location determination method step comprises using one or more of said at least one biomass characteristic.

14. The method for determining the location of a wireless sensor according to claim 12 or claim 13, whereby the two or more location determination methods comprise a range-based location determination method and a range-free location determination method.

15. The method for determining the location of a wireless sensor according to any of the claims 12 to 14, whereby said combining at least two of said two or more location estimate representations involves fusion by a discrete-time Kalman filter.

16. The method for determining the location of a wireless sensor according to any of the claims 12 to 15, whereby one or more of the location determination methods comprise a range-based location determination method based on a location determination method selected from a list comprising:

    - Received Signal Strength (RSS),
    - Time of Flight (ToF),
    - Time Difference of Flight (TDoF),
    - Time of Arrival (ToA),
    - Time Difference of Arrival (TDoA),
    - One-way trip measurements,
    - Round trip measurements,
    - RSS profiling, and
    - Angle of Arrival (AoA).

17. The method for determining the location of a wireless sensor according to any of the claims 12 to 16, whereby one or more of the location determination methods comprise a range-free location determination method is based on a location determination method selected from a list comprising:

- N-Hop Multilateration, and
- One-hop lateration technique.

18. The method for determining the location of a wireless sensor according to any of the claims 12 to 17, whereby one or more of the wireless units comprise wireless sensors.

19. The method for determining the location of a wireless sensor according to any of the claims 12 to 18, whereby said method is decentralized and carried out by the wireless sensor.

20. The method for determining the location of a wireless sensor according to any of the claims 12 to 18, whereby said method is centralized and carried out for several wireless sensors by a central unit such as a wireless gateway.

21. The method for determining the location of a wireless sensor according to any of the claims 12 to 20, whereby said at least one biomass characteristic comprises at least one of temperature, moisture content, humidity, density, dry matter content, salt content and pH-value.

22. The method for determining the location of a wireless sensor according to any of the claims 12 to 21, in which receiving the biomass characteristic comprises the wireless sensor sensing the characteristic related to its surrounding biomass.

23. Method for use of a wireless sensor network according to claim 10 or claim 11 for monitoring a biomass using a plurality of wireless units, wherein at least one of the wireless units is a wireless gateway and at least one is a wireless sensor, the method comprising:

- embedding the at least one wireless sensor in the biomass;
**Characterized in that** the method further comprises:
- determining an enhanced location estimate for the wireless sensor by using a method according to one of the claims 12-22,
- receiving at least one biomass characteristic from the wireless sensor,
- transmitting a representation of the enhanced location estimate and a representation of one or more of the at least one biomass characteristic to a biomass monitoring interface via the wireless gateway.

24. Method for use of a wireless sensor network for monitoring a biomass according to claim 23, including repeating said step of determining an enhanced location estimate for the wireless sensor on the occurrence of one or more of the following events since the step was last carried out:

- a predetermined time has elapsed,
- a predetermined biomass characteristic such as e.g. temperature has changed more than a predetermined amount,
- a motion detector in the wireless sensor such as e.g. an accelerometer has detected a possible motion,
- a location estimate of a wireless unit presents it as a moving object,
- processor has determined that the last location estimate is indicative of the sensor having moved more than a predefined distance;
- a wireless communication property such as e.g. received signal strength has changed more than a predetermined amount, and
- a request to determine the location of the wireless sensor has been received.

25. Method for use of a wireless sensor network for monitoring a biomass according to claim 23 or 24, whereby the location determination of a wireless sensor embedded in a biomass includes:

- employing two or more location determination methods to determine two or more location estimate representations for said wireless sensor by cooperating with three or more of said at least four wireless units, and
- determining an enhanced location estimate for said wireless sensor by combining at least two of said two or more location estimate representations;
whereby one or more of said at least one biomass characteristic is used in at least one of said determining an enhanced location estimate and said employing two or more location determination methods.

**Patentansprüche**

1. Eine Steuereinheit für einen drahtlosen Sensor, wobei der drahtlose Sensor in eine Biomasse eingebettet ist, die Steuereinheit ist konfiguriert, um:

   zumindest ein mit dem drahtlosen Sensor verbundenes Biomassemerkmal zu empfangen;
   **dadurch gekennzeichnet, dass** sie ferner konfiguriert ist, um
   zwei oder mehr Lageschätzungsdarstellungen für den drahtlosen Sensor, zumindest unter Verwendung von Eigenschaften der drahtlosen Kommunikation zwischen dem drahtlosen Sensor und einer oder mehr drahtlosen Einheiten, zu bestimmen; und
   eine verbesserte Lageschätzung für den drahtlosen Sensor durch Kombinieren von zumindest zwei der zwei oder mehr Lageschätzungsdarstellungen zu bestimmen;
   wobei die Steuereinheit konfiguriert ist, um zumindest eine der Bestimmungen unter Verwendung des zumindest einen Biomassemerkmals durchzuführen.

2. Die Steuereinheit gemäß Anspruch 1, wobei die Steuereinheit von dem drahtlosen Sensor entfernt positioniert ist.

3. Die Steuereinheit gemäß Anspruch 1, wobei die Steuereinheit am Ort des drahtlosen Sensors positioniert ist.

4. Die Steuereinheit nach einem der vorangehenden Ansprüche, wobei die Steuereinheit konfiguriert ist, um zumindest zwei der zwei oder mehr Lageschätzungsdarstellungen unter Verwendung einer zeitdiskreten Kalman-Filter-Verbindung zu kombinieren.

5. Die Steuereinheit nach einem der vorangehenden Ansprüche, wobei die Steuereinheit ferner konfiguriert ist, um einen Kalman-Filter auf das Biomassemerkmal anzuwenden.

6. Die Steuereinheit nach einem der vorangehenden Ansprüche, wobei zumindest eine der drahtlosen Einheiten eine drahtlose Relaiseinheit oder eine Gateway-Einheit umfasst.

7. Ein drahtloser Sensor, umfassend die Steuereinheit nach einem der vorangehenden Ansprüche.

8. Der drahtlose Sensor gemäß Anspruch 7, wobei der drahtlose Sensor Folgendes umfasst:

   ein oder mehrere Sensorgeräte, konfiguriert um zumindest ein Biomassemerkmal zu erfassen;
   eine Stromversorgung; und
   eine drahtlose Kommunikationseinheit.

9. Ein drahtloses Sensornetzwerk, umfassend:

   eine Steuereinheit gemäß einem der Ansprüche 1 bis 6; und
   einen oder mehrere drahtlose Sensoren.

10. Das drahtlose Sensornetzwerk nach Anspruch 9, umfassend
    zumindest vier drahtlose Einheiten;
    wobei zumindest einer der drahtlosen Einheiten den einen oder mehrere drahtlose Sensoren umfasst.

11. Das Drahtlose Sensornetzwerk gemäß Anspruch 10, wobei zumindest einer der zumindest vier drahtlosen Einheiten ein drahtloses Gateway umfasst.

12. Eine Biomasse mit einem oder mehreren darin eingebetteten drahtlosen Sensoren gemäß einem der Ansprüche 7 bis 8.

13. Ein Verfahren zur Bestimmung der Lage eines in einer Biomasse eingebetteten drahtlosen Sensors, wobei der drahtlose Sensor sich in der Reichweite drahtloser Kommunikation von einem oder mehrerer drahtloser Einheiten befindet, wobei das Verfahren umfasst:

    - Empfangen von zumindest einem mit dem drahtlosen Sensor verbundenem Biomassemerkmal,
    **dadurch gekennzeichnet, dass** das Verfahren ferner Folgendes umfasst,

- Verwenden von zwei oder mehr Lagebestimmungsmethoden um mittels Kooperieren mit einem oder mehr der drahtlosen Einheiten zwei oder mehrere Lageschätzungsdarstellungen für den drahtlosen Sensor zu bestimmen, und

- Bestimmen einer verbesserten Lageschätzung für den drahtlosen Sensor mittels Kombinieren von zumindest zwei der zwei oder mehr Lageschätzungsdarstellungen;

- wobei zumindest einer der Verfahrensschritt zum Bestimmen einer verbesserten Lageschätzung und zum Verwenden von zwei oder mehr Lagebestimmungsmethoden die Verwendung von einem oder mehreren der zumindest einen Biomassemerkmale umfasst.

14. Das Verfahren zur Bestimmung der Lage eines drahtlosen Sensors gemäß Anspruch 12 oder 13, wobei die zwei oder mehr Lagebestimmungsmethoden eine bereichsbasierte Lagebestimmungsmethode und eine bereichsfreie Lagebestimmungsmethode umfassen.

15. Das Verfahren zur Bestimmung der Lage eines drahtlosen Sensors gemäß einem der Ansprüche 12 bis 14, wobei das Kombinieren von zumindest zwei der zwei oder mehr Lageschätzungsdarstellungen die Verbindung mittels eines zeitdiskreten Kalman-Filters beinhaltet.

16. Das Verfahren zur Bestimmung der Lage eines drahtlosen Sensors gemäß einem der Ansprüche 12 bis 15, wobei ein oder mehrere der Lagebestimmungsmethoden eine bereichsbasierte Lagebestimmungsmethode umfassen, die auf einer Lagebestimmungsmethoden basiert, ausgewählt aus einer Liste, bestehend aus:

    - Empfangene Signalstärke (RSS),
    - Time-of-Flight (ToF),
    - Time Difference of Flight (TDoF),
    - Time of Arrival (ToA),
    - Time Difference of Arrival (TDoA),
    - Einfach-Weg-Messungen,
    - Rundreise-Weg-Messungen,
    - RSS-Profilierung, und
    - Angle of Arrival (AoA).

17. Das Verfahren zur Bestimmung der Lage eines drahtlosen Sensors gemäß einem der Ansprüche 12 bis 16, wobei eine oder mehrere der Lagebestimmungsmethoden eine bereichsfreie Lagebestimmungsmethode umfassen, die auf einer Lagebestimmungsmethode basiert, ausgewählt aus einer Liste, bestehend aus:

    - N-Hop Multilateration, und
    - Ein-Hop Laterationstechnik.

18. Das Verfahren zur Bestimmung der Lage eines drahtlosen Sensors gemäß einem der Ansprüche 12 bis 17, wobei eine oder mehrere der drahtlosen Einheiten drahtlose Sensoren umfassen.

19. Das Verfahren zur Bestimmung der Lage eines drahtlosen Sensors gemäß einem der Ansprüche 12 bis 18, wobei die Methode dezentralisiert ist und von dem drahtlosen Sensor ausgeführt wird.

20. Das Verfahren zur Bestimmung der Lage eines drahtlosen Sensors gemäß einem der Ansprüche 12 bis 18, wobei besagte Methode zentralisiert ist und für mehrere drahtlose Sensoren durch eine Zentraleinheit, wie ein drahtloses Gateway, ausgeführt wird.

21. Das Verfahren zur Bestimmung der Lage eines drahtlosen Sensors gemäß einem der Ansprüche 12 bis 20, wobei das zumindest eine Biomassemerkmal zumindest eines aus Temperatur, Feuchtigkeitsgehalt, Feuchtigkeit, Dichte, Trockenmassengehalt, Salzgehalt und pH-Wert umfasst.

22. Das Verfahren zur Bestimmung der Lage eines drahtlosen Sensors gemäß einem der Ansprüche 12 bis 21, in welchem das Empfangen des Biomassemerkmals umfasst, dass der drahtlose Sensor die Merkmale abtastet, die auf die ihn umgebende Biomasse bezogen sind.

23. Das Verfahren zur Verwendung eines drahtlosen Sensornetzwerks gemäß Anspruch 10 oder Anspruch 11 zur Überwachung einer Biomasse unter Verwendung einer Vielzahl drahtloser Einheiten, wobei zumindest eine der drahtlosen Einheiten ein drahtloses Gateway und zumindest eines ein drahtloser Sensor ist, wobei das Verfahren umfasst:

- Einbetten den zumindest einen drahtlosen Sensor in der Biomasse;
**dadurch gekennzeichnet, dass** das Verfahren ferner Folgendes umfasst:
- Bestimmen einer verbesserten Lageschatzung für den drahtlosen Sensor unter Verwendung einer Methode gemäß einem der Ansprüche 12 bis 22,
- Empfangen zumindest eines Biomassemerkmals von dem drahtlosen Sensor,
- Übertragen einer Darstellung der verbesserten Lageschätzung und einer Darstellung der einen oder mehreren des zumindest einen Biomassemerkmals zu einer Biomasse-Überwachungsschnittstelle über das drahtlose Gateway.

24. Das Verfahren zur Verwendung eines drahtlosen Sensornetzwerks zur Überwachung einer Biomasse gemäß Anspruch 23, eischließlich der Wiederholung des Schrittes der Bestimmung einer verbesserten Lageschatzung für den drahtlosen Sensor beim Eintritt eines oder mehrerer der folgenden Ereignisse, seit der Schritt das letzte Mal ausgeführt wurde:

- eine vorgegebene Zeit ist abgelaufen,
- ein vorgegebenes Biomassemerkmal, wie bspw. die Temperatur, hat sich um mehr als einen vorgegebenen Betrag geändert,
- ein Bewegungsdetektor in dem drahtlosen Sensor, wie bspw. ein Beschleunigungsmesser, hat eine mögliche Bewegung erfasst,
- eine Lageschätzung einer drahtlosen Einheit zeigt es als ein sich bewegendes Objekt,
- der Prozessor hat bestimmt, dass die letzte Lageschätzung ein Indiz für eine Bewegung des Sensors über eine vordefinierte Distanz hinaus ist,
- ein drahtloses Kommunikationsmerkmal, wie bspw. die empfangene Signalstärke hat sich um mehr als einen vorgegebenen Betrag geändert, und
- eine Anfrage zur Bestimmung der Lage des drahtlosen Sensors wurde empfangen.

25. Das Verfahren zur Verwendung eines drahtlosen Sensornetzwerks zur Überwachung einer Biomasse gemäß Anspruch 23 oder 24, wobei die Lagebestimmung eines in einer Biomasse eingebetteten drahtlosen Sensors umfasst:

- Verwenden von zwei oder mehr Lagebestimmungsmethoden zum Bestimmen von zwei oder mehreren Lageschätzungsdarstellungen für den drahtlosen Sensor mittels Kooperieren mit drei oder mehr der zumindest vier drahtlosen Einheiten, und
- Bestimmen einer verbesserten Lageschätzung für den drahtlosen Sensor durch Kombinieren von zumindest zwei der zwei oder mehr Lageschätzungsdarstellungen;
wobei eine oder mehrere der zumindest einen Biomassemerkmale zumindest in einem vom Bestimmen einer verbesserten Lageschätzung und Verwenden von zwei oder mehr Lagebestimmungsmethoden verwendet wird.

## Revendications

1. Contrôleur pour capteur sans fil, le capteur sans fil étant destiné à être noyé dans une biomasse, le contrôleur étant configuré pour :

recevoir au moins une caractéristique de biomasse associée au capteur sans fil ;
**caractérisé en ce qu'**il est en outre configuré pour :

déterminer deux ou plusieurs représentations d'estimation d'emplacement dudit capteur sans fil en utilisant au moins des propriétés de communication sans fil entre le capteur sans fil et une ou plusieurs unités sans fil ; et
déterminer une estimation d'emplacement améliorée dudit capteur sans fil en combinant au moins deux desdites deux ou plusieurs représentations d'estimation d'emplacement ;
le contrôleur étant configuré pour effectuer au moins l'une des déterminations en utilisant ladite au moins une caractéristique de biomasse.

2. Contrôleur selon la revendication 1, le contrôleur étant distant du capteur sans fil.

3. Contrôleur selon la revendication 1, le contrôleur étant disposé à proximité du capteur sans fil.

4. Contrôleur selon l'une quelconque des revendications précédentes, le contrôleur étant configuré pour combiner au moins deux desdites deux ou plusieurs représentations d'estimation d'emplacement en utilisant une fusion par filtre de Kalman en temps discret.

5. Contrôleur selon l'une quelconque des revendications précédentes, ledit contrôleur étant en outre configuré pour appliquer un filtre de Kalman à la caractéristique de biomasse.

6. Contrôleur selon l'une quelconque des revendications précédentes, dans lequel au moins l'une des unités sans fil comprend une unité de relais sans fil ou une unité de passerelle.

7. Capteur sans fil comprenant le contrôleur selon l'une quelconque des revendications précédentes.

8. Capteur sans fil selon la revendication 7, le capteur sans fil comprenant :

   un ou plusieurs dispositifs capteurs configurés pour obtenir au moins une caractéristique de biomasse ;
   une alimentation électrique ; et
   une unité de communication sans fil.

9. Réseau de capteur(s) sans fil comprenant :

   un contrôleur selon l'une quelconque des revendications 1 à 6 ; et
   un ou plusieurs capteurs sans fil.

10. Réseau de capteur(s) sans fil selon la revendication 9, comprenant :

    au moins quatre unités sans fil ;
    dans lequel au moins l'une des unités sans fil comprend les un ou plusieurs capteurs sans fil.

11. Réseau de capteur(s) sans fil selon la revendication 10, dans lequel au moins l'une des au moins quatre unités sans fil comprend une passerelle sans fil.

12. Biomasse dans laquelle sont noyés un ou plusieurs capteurs sans fil selon l'une quelconque des revendications 7 à 8.

13. Procédé de détermination de l'emplacement d'un capteur sans fil noyé dans une biomasse, dans lequel le capteur sans fil se trouve à une distance de communication sans fil d'une ou plusieurs unités sans fil, le procédé comprenant :

    - la réception d'au moins une caractéristique de biomasse associée au capteur sans fil,
    **caractérisé en ce que** le procédé comprend en outre les étapes consistant à :
    - employer deux ou plus de procédés de détermination d'emplacement afin de déterminer deux ou plusieurs représentations d'estimation d'emplacement dudit capteur sans fil en coopérant avec une ou plusieurs unités sans fil, et
    - déterminer une estimation d'emplacement améliorée dudit capteur sans fil en combinant au moins deux desdites deux ou plusieurs représentations d'estimation d'emplacement ;
    dans lequel au moins l'une de ladite étape de détermination d'un procédé d'estimation d'emplacement améliorée et de ladite étape d'emploi de deux ou plusieurs procédés de détermination d'emplacement comprend l'utilisation d'une ou plusieurs de ladite au moins une caractéristique de biomasse.

14. Procédé de détermination de l'emplacement d'un capteur sans fil selon la revendication 12 ou la revendication 13, dans lequel les deux ou plusieurs procédés de détermination d'emplacement comprennent un procédé de détermination d'emplacement basé sur la distance et un procédé de détermination d'emplacement sans recours à la distance.

15. Procédé de détermination de l'emplacement d'un capteur sans fil selon l'une quelconque des revendications 12 à 14, dans lequel ladite combinaison d'au moins deux desdites deux ou plusieurs représentations d'estimation d'emplacement implique une fusion par un filtre de Kalman en temps discret.

**16.** Procédé de détermination de l'emplacement d'un capteur sans fil selon l'une quelconque des revendications 12 à 15, dans lequel un ou plusieurs procédés de détermination d'emplacement comprend ou comprennent un procédé de détermination d'emplacement basé sur la distance reposant sur un procédé de détermination choisi dans une liste comprenant :

- force du signal reçu (RSS),
- temps de vol (ToF),
- différence de temps de vol (TDoF)
- temps d'arrivée (ToA)
- différence de temps d'arrivée (TDoA)
- mesures d'excursion simple,
- mesures d'excursion aller-retour,
- profilage RSS, et
- angle d'arrivée (AoA).

**17.** Procédé de détermination de l'emplacement d'un capteur sans fil selon l'une quelconque des revendications 12 à 16, dans lequel un ou plus des procédés de détermination d'emplacement comprend ou comprennent un procédé de détermination d'emplacement sans recours à la distance reposant sur un procédé de détermination d'emplacement choisi dans une liste comprenant :

- multilatération à n sauts et
- technique de latération à saut unique.

**18.** Procédé de détermination de l'emplacement d'un capteur sans fil selon l'une quelconque des revendications 12 à 17, dans lequel une ou plus des unités sans fil comprend ou comprennent des capteurs sans fil.

**19.** Procédé de détermination de l'emplacement d'un capteur sans fil selon l'une quelconque des revendications 12 à 18, dans lequel ledit procédé est décentralisé et effectué par le capteur sans fil.

**20.** Procédé de détermination de l'emplacement d'un capteur sans fil selon l'une quelconque des revendications 12 à 18, dans lequel ledit procédé est centralisé et effectué pour plusieurs capteurs sans fil par une unité centrale telle qu'une passerelle sans fil.

**21.** Procédé de détermination de l'emplacement d'un capteur sans fil selon l'une quelconque des revendications 12 à 20, dans lequel ladite au moins une caractéristique de biomasse comprend au moins l'une des caractéristiques suivantes : température, teneur en eau, humidité, densité, teneur en matières sèches, teneur en sels et valeur du pH.

**22.** Procédé de détermination de l'emplacement d'un capteur sans fil selon l'une quelconque des revendications 12 à 21, dans lequel la réception de la caractéristique de biomasse comprend la détection par le capteur sans fil de la caractéristique rapportée à sa biomasse environnante.

**23.** Procédé d'utilisation d'un réseau de capteur(s) sans fil selon la revendication 10 ou la revendication 11 pour contrôler une biomasse en utilisant une pluralité d'unités sans fil, dans
lequel au moins l'une des unités sans fil est une passerelle sans fil et au moins l'une d'entre elles est un capteur sans fil, le procédé comprenant :

- le noyage du au moins un capteur sans fil dans la biomasse ;
**caractérisé en ce que** le procédé comprend en outre les étapes consistant à :
- déterminer une estimation d'emplacement améliorée du capteur sans fil en utilisant un procédé selon l'une quelconque des revendications 12 à 22,
- recevoir au moins une caractéristique de biomasse depuis le capteur sans fil, et
- transmettre une représentation de l'estimation d'emplacement améliorée et une représentation d'une ou plusieurs de l'au moins une caractéristique de biomasse à une interface de contrôle de la biomasse via la passerelle sans fil.

**24.** Procédé d'utilisation d'un réseau de capteurs sans fil afin de contrôler une biomasse selon la revendication 23, comprenant la répétition de ladite étape de détermination d'une estimation d'emplacement améliorée du capteur sans fil lors de l'occurrence d'un ou plusieurs événements suivants depuis que l'étape a été réalisée en dernier lieu :

- un temps prédéterminé s'est écoulé,
- une caractéristique prédéterminée de la biomasse telle que, par exemple, la température, a varié de plus d'une quantité prédéterminée,
- un détecteur de mouvement dans le capteur sans fil tel que, par exemple, un accéléromètre, a détecté un mouvement possible,
- une estimation d'emplacement d'une unité sans fil la présente comme un objet mobile,
- le processeur a déterminé que la dernière estimation d'emplacement est indicative d'un déplacement du capteur supérieur à une distance prédéfinie,
- une propriété de communication sans fil telle que, par exemple, la force du signal reçu, a varié de plus d'une quantité prédéterminée, et
- une demande de détermination de l'emplacement du capteur sans fil a été reçue.

25. Procédé d'utilisation d'un réseau de capteur(s) sans fil pour contrôler une biomasse selon la revendication 23 ou la revendication 24, dans lequel la détermination de l'emplacement d'un capteur sans fil noyé dans une biomasse comprend les étapes consistant à :

- employer deux ou plusieurs procédés de détermination d'emplacement afin de déterminer deux ou plusieurs représentations de l'estimation d'emplacement dudit capteur sans fil en coopération avec trois ou plus desdites au moins quatre unités sans fil, et
- déterminer une estimation d'emplacement améliorée dudit capteur sans fil en combinant au moins deux desdites deux ou plusieurs représentations de l'estimation d'emplacement ;
dans lequel une ou plusieurs de ladite au moins une caractéristique de biomasse est ou sont utilisées dans au moins l'une des étapes de ladite détermination d'une estimation d'emplacement améliorée et dudit emploi de deux ou plusieurs procédés de détermination d'emplacement.

WS3

WS2

WS4

WS1

BM

WS5

WS6  WG  BMI

**Fig. 1**

WS  PS  CA

WCU

SP

SD1

SD2

**Fig. 2**

WS

**Fig. 3**

LM1

Localization
method 1

LM2

Localization
method 2

Measured
Biomass
Characteristic

DF

Data fusion

BC

ELE

Enhanced
Location
Estimation

*Fig. 4*

LM2

Received Signal Strength (RSS)
path loss model method

LM1

LM3

Time-of-Arrival (TOA)
method

Data fusion

(Kalman
Filter)

N-hop multilateration
method

Measured
Biomass
Characteristic

DF

BC

ELE

Enhanced
Location
Estimation

*Fig. 5*

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 418159 A

- WO 2008151635 A1

**Non-patent literature cited in the description**

- **ESMAEIL S. NADIMI ; HENNING T. SØGAARD.** Observer Kalman filter identification and multiple model adaptive estimation based classification of animal behaviour using wireless sensor networks. *Computers and Electronics in Agriculture,* 2009, vol. 68 (1), 9-17